# EUROPEAN PATENT APPLICATION

(11) **EP 3 188 046 A1**
(43) Date of publication of application: **05.07.2017**
(21) Application number: 16201465.8
(22) Date of filing: 30.11.2016
(51) Int. Cl.: G06F 17/30

(54) **METHOD AND DEVICE FOR ACQUIRING USER INFORMATION, AND RELEVANT TERMINAL DEVICES AND SERVER**

(30) Priority: 28.12.2015 CN 201511001356
(71) Applicant: Xiaomi Inc., Beijing 100085 (CN)
(72) Inventor: ZHANG, Xiaoliang, Beijing, Beijing 100085 (CN); YAN, Hao, Beijing, Beijing 100085 (CN); ZHANG, Jianchun, Beijing, Beijing 100085 (CN)
(74) Representative: Sackin, Robert

(57) **Abstract**

Method and device for acquiring user information and related terminal devices and server are disclosed in the present disclosure. The method includes: obtaining (S101) headshot information of a target user; and further acquiring (S102) user information of the target user, based on the headshot information of the target user and a predefined set of acquisition policies. As can be seen, the terminal device is capable of accurately acquiring the user information of the target user, and thus the user's experience can be improved. [FIG. 1A]

## Description

### FIELD

The present disclosure generally relates to communication technologies, and more particularly, to a method and device for acquiring user information and related terminal devices and server.

### BACKGROUND

Over time, the changes of economic and society environments make it more important for a person to interact with others. Only through continually talking and communicating with various people, a user may continually enrich himself and develop himself. Therefore, the user needs to continually expand his own contacts and connections.

In related art, when a user A wants to get user information of user B, the user A usually needs to firstly obtain user B's relevant information (e.g., a name), and then acquire more information of user B through network or other channels (e.g., asking acquaintance about user B) using such relevant information of the user B.

### SUMMARY

In view of the fact in related art, a method and device for acquiring user information and related terminal devices and server are provided in the disclosure.

According to a first aspect of the present disclosure, there is provided a method for acquiring user information, including: obtaining headshot information of a target user; and acquiring user information of the target user, based on the headshot information of the target user and a predefined set of acquisition policies, wherein the predefined set of acquisition policies includes at least one acquisition policy, and each of the acquisition policies indicates a respective way of acquiring user information of the target user.

Embodiments of the disclosure may provide the following beneficial effects. With the steps of obtaining headshot information of a target user, and acquiring user information of the target user, based on the headshot information of the target user and a predefined set of acquisition policies, the user information of the target user can be accurately acquired, and thus the user's experience can be improved.

Additionally, the acquiring may include: transmitting the headshot information of the target user to a server to instruct the server to, according to the headshot information of the target user, inquire whether the server includes the user information of the target user, wherein the user information includes headshot information and profile information of the target user; and receiving a first response message returned from the server, wherein the first response message contains the user information of the target user.

Alternatively or additionally, after transmitting the headshot information of the target user to the server, the method may further include: receiving a second response message returned from the server, wherein the second response message indicates that the server does not include the user information of the target user; broadcasting the headshot information of the target user within a predefined range in which a target terminal device corresponding to the target user is located; and receiving a third response message returned from the target terminal device, wherein the third response message contains the user information locally stored in the target terminal device.

In an alternative embodiment, the acquiring may include: broadcasting the headshot information of the target user within a predefined range in which a target terminal device corresponding to the target user is located; and receiving a third response message returned from the target terminal device, wherein the third response message contains the user information locally stored in the target terminal device.

Alternatively or additionally, after broadcasting the headshot information of the target user within the predefined range, the method may further include: receiving a fourth response message returned from the target terminal device, wherein the fourth response message indicates that the target user refuses to transmit the user information of the target user; transmitting the headshot information of the target user to a server to instruct the server to, according to the headshot information of the target user, inquire whether the server includes the user information of the target user, wherein the user information includes headshot information and profile information of the target user; and receiving a first response message returned from the server, wherein the first response message contains the user information of the target user.

Embodiments of the disclosure may provide the following beneficial effects. With the steps of acquiring the user information of the target user through a server and acquiring the user information of the target user in a manner of broadcasting the headshot information of the target user, which are combined herein, the user information of the target user can be acquired. As can be seen, the user information of the target user can be accurately acquired, and thus the user's experience can be improved.

According to a second aspect of the present disclosure, there is provided a method for acquiring user information, including: receiving headshot information of a target user transmitted by a first terminal device; inquiring, according to the headshot information of the target user, whether the server includes the user information of the target user, wherein the user information includes headshot information and profile information of the target user; and transmitting a first response message to the first terminal device, in the case that the server includes the user information of the target user, wherein the first response message contains the user information of the target user.

In an alternative embodiment, after inquiring whether the server includes the user information of the target user, the method may further include: transmitting a second response message to the first terminal device, in the case that the server does not include the user information of the target user, wherein the second response message indicates that the server does not include the user information of the target user.

Alternatively or additionally, before receiving the headshot information of the target user transmitted by the first terminal device, the method may further include: acquiring and saving at least one user's user information.

Embodiments of the disclosure may provide the following beneficial effects. With the steps of receiving headshot information of a target user transmitted by a first terminal device, inquiring, according to the headshot information of the target user, whether the server includes the user information of the target user, and transmitting a first response message to the first terminal device, in the case that the server includes the user information of the target user, the first terminal device is capable of accurately acquiring the user information of the target user, and thus the user's experience can be improved.

According to a third aspect of the present disclosure, there is provided a method for acquiring user information, including: receiving headshot information of a target user broadcasted by a first terminal device; determining whether a second terminal device is a target terminal device corresponding to the target user, based on the headshot information of the target user and headshot information stored in the second terminal device; and transmitting a third response message to the first terminal device, in the case that the second terminal device is the target terminal device, wherein the third response message contains the user information locally stored in the target terminal device, and the user information includes headshot information and profile information of the target user.

In an alternative embodiment, after determining whether the second terminal device is the target terminal device corresponding to the target user, the method may further include: transmitting a fourth response message to the first terminal device, in the case that the second terminal device is the target terminal device and the target user refuses to transmit the user information of the target user to the first terminal device, wherein the fourth response message indicates that the target user refuses to transmit the user information of the target user.

Embodiments of the disclosure may provide the following beneficial effects. With the steps of receiving headshot information of a target user broadcasted by a first terminal device, determining whether a second terminal device is a target terminal device corresponding to the target user, based on the headshot information of the target user and headshot information stored in the second terminal device, and transmitting a third response message to the first terminal device, in the case that the second terminal device is the target terminal device, the first terminal device is capable of accurately acquiring the user information of the target user, and thus the user's experience can be improved.

According to a fourth aspect of the present disclosure, there is provided a device for acquiring user information, including: a first obtaining module configured to obtain headshot information of a target user; and a second acquisition module configured to acquire user information of the target user, based on the headshot information obtained by the first obtaining module and a predefined set of acquisition policies, wherein the predefined set of acquisition policies includes at least one acquisition policy, and each of the acquisition policies indicates a respective way of acquiring user information of the target user.

Additionally, the second acquisition module may include: a first transmission sub-module configured to transmit the headshot information obtained by the first obtaining module to a server to instruct the server to, according to the headshot information of the target user, inquire whether the server includes the user information of the target user, wherein the user information includes headshot information and profile information of the target user; and a first reception sub-module configured to receive a first response message returned from the server, wherein the first response message contains the user information of the target user.

Alternatively or additionally, the second acquisition module may further include: a second reception sub-module configured to receive a second response message returned from the server, wherein the second response message indicates that the server does not include the user information of the target user; a first broadcasting sub-module configured to broadcast the headshot information obtained by the first obtaining module within a predefined range in which a target terminal device corresponding to the target user is located; and a third reception sub-module configured to receive a third response message returned from the target terminal device, wherein the third response message contains the user information locally stored in the target terminal device.

In an alternative embodiment, the second acquisition module may include: a second broadcasting sub-module configured to broadcast the headshot information obtained by the first obtaining module within a predefined range in which a target terminal device corresponding to the target user is located; and a fourth reception sub-module configured to receive a third response message returned from the target terminal device, wherein the third response message contains the user information locally stored in the target terminal device.

Alternatively or additionally, the second acquisition module may further include: a fifth reception sub-module configured to receive a fourth response message returned from the target terminal device, wherein the fourth response message indicates that the target user refuses to transmit the user information of the target user; a second transmission sub-module configured to transmit the headshot information obtained by the first obtaining module to a server to instruct the server to, according to the headshot information of the target user, inquire whether the server includes the user information of the target user, wherein the user information includes headshot information and profile information of the target user; and a sixth reception sub-module configured to receive a first response message returned from the server, wherein the first response message contains the user information of the target user.

According to a fifth aspect of the present disclosure, there is provided a device for acquiring user information, including: a reception module configured to receive headshot information of a target user transmitted by a first terminal device; an inquiry module configured to inquire, according to the headshot information received by the reception module, whether the server includes the user information of the target user, wherein the user information includes headshot information and profile information of the target user; and a first transmission module configured to transmit a first response message to the first terminal device, in the case that the inquiry module determines that the server includes the user information of the target user, wherein the first response message contains the user information of the target user.

Alternatively or additionally, the device may further include: a second transmission module configured to transmit a second response message to the first terminal device, in the case that the inquiry module determines that the server does not include the user information of the target user, wherein the second response message indicates that the server does not include the user information of the target user.

Alternatively or additionally, the device may further include: an acquisition module configured to acquire and save at least one user's user information.

According to a sixth aspect of the present disclosure, there is provided a device for acquiring user information, including: a reception module configured to receive headshot information of a target user broadcasted by a first terminal device; a determination module configured to determine whether a second terminal device is a target terminal device corresponding to the target user, based on the headshot information received by the reception module and headshot information stored in the second terminal device; and a first transmission module configured to transmit a third response message to the first terminal device, in the case that the determination module determines that the second terminal device is the target terminal device, wherein the third response message contains the user information locally stored in the target terminal device, and the user information includes headshot information and profile information of the target user.

Alternatively or additionally, the device may further include: a second transmission module configured to transmit a fourth response message to the first terminal device, in the case that the determination module determines that the second terminal device is the target terminal device and the target user refuses to transmit the user information of the target user to the first terminal device, wherein the fourth response message indicates that the target user refuses to transmit the user information of the target user.

According to a seventh aspect of the present disclosure, there is provided a terminal device, the terminal device acting as a first terminal device, the terminal device includes a processor and a memory for storing instructions executable by the processor, wherein the processor is configured to: obtaining headshot information of a target user; and acquiring user information of the target user, based on the headshot information of the target user and a predefined set of acquisition policies, wherein the predefined set of acquisition policies includes at least one acquisition policy, and each of the acquisition policies indicates a respective way of acquiring user information of the target user.

According to an eighth aspect of the present disclosure, there is provided a server, including a transmitter, a receiver, a processor, and a memory for storing instructions executable by the processor, wherein: the receiver is configured to receive headshot information of a target user transmitted by a first terminal device; the processor is configured to inquire, according to the headshot information of the target user, whether the server includes the user information of the target user, wherein the user information includes headshot information and profile information of the target user; and the transmitter is configured to transmit a first response message to the first terminal device, in the case that the server includes the user information of the target user, wherein the first response message contains the user information of the target user.

According to a ninth aspect of the present disclosure, there is provided a terminal device, the terminal device acting as a second terminal device, the terminal device includes a transmitter, a receiver, a processor, and a memory for storing instructions executable by the processor, wherein: the receiver is configured to receive headshot information of a target user broadcasted by a first terminal device; the processor is configured to determine whether a second terminal device is a target terminal device corresponding to the target user, based on the headshot information of the target user and headshot information stored in the second terminal device; and the transmitter is configured to transmit a third response message to the first terminal device, in the case that the second terminal device is the target terminal device, wherein the third response message contains the user information locally stored in the target terminal device, and the user information includes headshot information and profile information of the target user.

Embodiments of the disclosure may provide the following beneficial effects. By providing methods and device for acquiring user information, and related terminal devices and server, accompanying with the steps of obtaining headshot information of a target user, and acquiring user information of the target user, based on the headshot information of the target user and a predefined set of acquisition policies, the user information of the target user can be accurately acquired, and thus the user's experience can be improved.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow chart of a method for acquiring user information according to an exemplary embodiment;
Fig. 1B is a schematic diagram illustrating a scenario in which a method of acquiring user information may be applied according to an exemplary embodiment;
Fig. 1C is a schematic diagram illustrating interface of the acquired user information of a target user when implementing the exemplary embodiment of Fig. 1A;
Fig. 2A is a flow chart of another method for acquiring user information according to another exemplary embodiment;
Figs. 2B-2D are schematic diagrams illustrating interfaces displayed when implementing the exemplary embodiment of Fig. 2A;
Fig. 3A is a flow chart of another method for acquiring user information according to an exemplary embodiment;
Figs. 3B-3D are schematic diagrams illustrating interfaces displayed when implementing the exemplary embodiment of Fig. 3A;
Fig. 4 is a flow chart of another method for acquiring user information according to an exemplary embodiment;
Fig. 5A is a flow chart of another method for acquiring user information according to an exemplary embodiment;
Fig. 5B is a schematic diagram illustrating an interface displayed when implementing the exemplary embodiment of Fig. 5A;
Fig. 6 is a block diagram of a device for acquiring user information according to an exemplary embodiment;
Fig. 7 is a block diagram of another device for acquiring user information according to an exemplary embodiment;
Fig. 8 is a block diagram of another device for acquiring user information according to an exemplary embodiment;
Fig. 9 is a block diagram of a physical entity of a terminal device according to an exemplary embodiment;
Fig. 10 is a block diagram of a terminal device 1200 according to an exemplary embodiment;
Fig. 11 is a block diagram of another device for acquiring user information according to an exemplary embodiment;
Fig. 12 is a block diagram of another device for acquiring user information according to an exemplary embodiment;
Fig. 13 is a block diagram of a physical entity of a server according to an exemplary embodiment;
Fig. 14 is a block diagram of a server 1900 according to an exemplary embodiment;
Fig. 15 is a block diagram of another device for acquiring user information according to an exemplary embodiment;
Fig. 16 is a block diagram of another device for acquiring user information according to an exemplary embodiment;
Fig. 17 is a block diagram of another physical entity of a terminal device according to an exemplary embodiment.

With reference to the above drawings, specific embodiments of the present disclosure have been illustrated, which will be described below in more details. Those drawings and literature descriptions are not intended for limiting the scope of the invention conceptions in any way, but to illustrate concepts of the disclosure for those skilled in the art by referring to particular embodiments.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of devices and methods consistent with aspects related to the invention as recited in the appended claims.

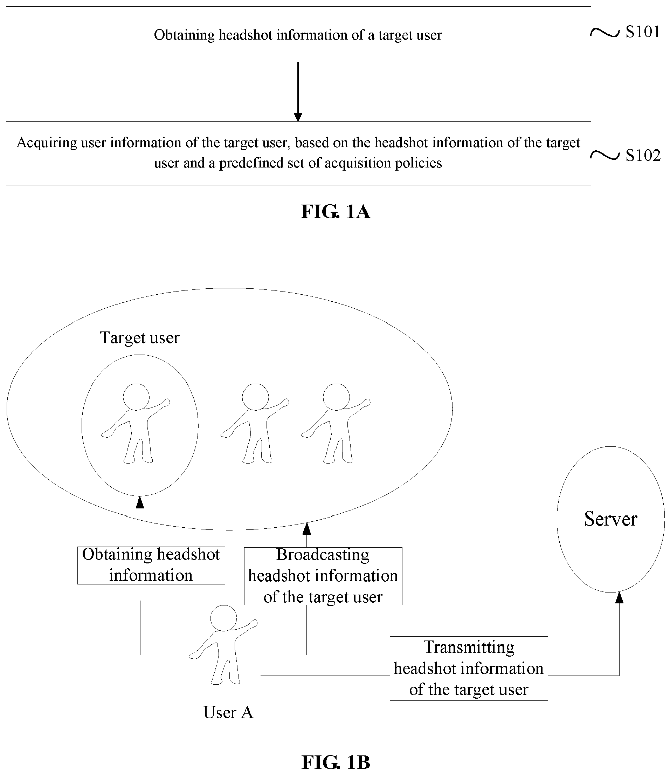

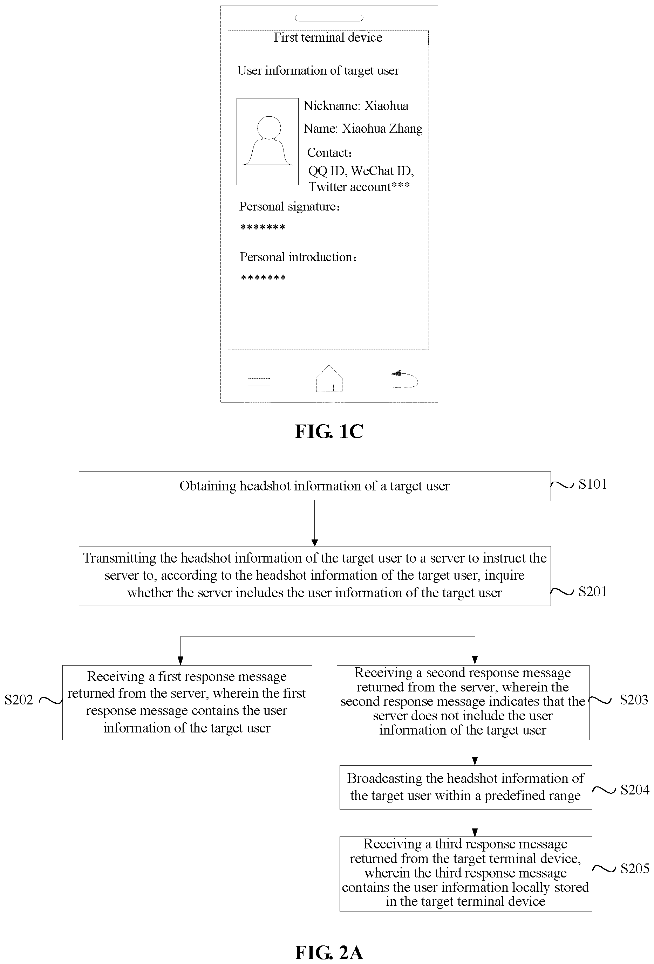

Fig. 1A is a flow chart of a method for acquiring user information according to an exemplary embodiment, Fig. 1B is a schematic diagram illustrating a scenario in which a method of acquiring user information may be applied according to an exemplary embodiment, and Fig. 1C is a schematic diagram illustrating interface of the acquired user information of a target user when implementing the exemplary embodiment of Fig. 1A. As shown in Fig. 1A, this user information acquisition method may be applied in varies of terminal devices through the use of a headshot information based user recognition software. Accordingly, a purpose of acquiring user information of a target user based on the headshot information is achieved. This user information acquisition method includes the following steps.

In step S101, headshot information of a target user is obtained.

In this step, optionally, as shown in Fig. 1B, in a certain occasion, when a user A having a terminal device wants to know someone (i.e., the target user), the terminal device may be operated to open the headshot information based user recognition software, and then the terminal device is targeted to the target user such that the headshot information of the target user can be acquired with a headshot-capture function of the user recognition software. Optionally, the headshot information of the target user may be obtained by a camera of the terminal device. The headshot information of the target user may uniquely identify the target user. Optionally, after the terminal device is operated to open the headshot information based user recognition software, if the user A having the terminal device has also identified the person that he or she wants to meet with (i.e., the target user) through a communication software such as WeChat, QQ, etc., the terminal device may save the headshot information of the target user (in case that the target user has disclosed the headshot information in the communication software). Certainly, the headshot information of the target user may also be obtained by other ways, and embodiments of the disclosure are not limited in this respect.

In step S102, user information of the target user is acquired based on the headshot information of the target user and a predefined set of acquisition policies.

In this step, as the headshot information of the target user may uniquely identify the target user, after obtaining the headshot information of the target user, the terminal device may acquire the user information of the target user based on the headshot information of the target user and a predefined set of acquisition policies. Optionally, the predefined set of acquisition policies may include at least one acquisition policy, and each of the acquisition policies indicates a respective way of acquiring user information of the target user (i.e., approaches of how to acquire user information of the target user based on the headshot information of the target user). Alternatively or additionally, as shown in Fig. 1B, after the terminal device is operated to open the headshot information based user recognition software, according to the headshot information of the target user, the user information of the target user may be acquired from a server (e.g., a cloud server) (for example, it may be referred as acquisition policy 1); or the user information of the target user may be acquired by a way of broadcasting the headshot information of the target user within a predefined range (for example, it may be referred as acquisition policy 2); or the user information of the target user may be acquired through the combination of the above two approaches (for example, it may be referred as acquisition policy 3). Certainly, the user information of the target user may also be acquired through other ways, and embodiments of the disclosure are not limited in this respect.

Alternatively or additionally, as shown in Fig. 1C, the user information acquired in step S102 may include the target user's headshot information and profile information (for example, the target user's name or nickname, contact information such as WeChat account number, QQ account number, Twitter account number, etc., and other related description information), such that the user A can contact the target user according to the profile information. Although the headshot information of the target user acquired in step S102 may be different from the headshot information obtained in step S101 (for example, in terms of description manner), both of them can uniquely identify the target user. For instance, these two headshot information may be headshot information of the target user at different times, and both of them uniquely identify the same target user.

A method of acquiring user information is provided in this embodiment. With the steps of obtaining headshot information of a target user, and acquiring user information of the target user, based on the headshot information of the target user and a predefined set of acquisition policies, the user information of the target user can be accurately acquired, and thus the user's experience can be improved.

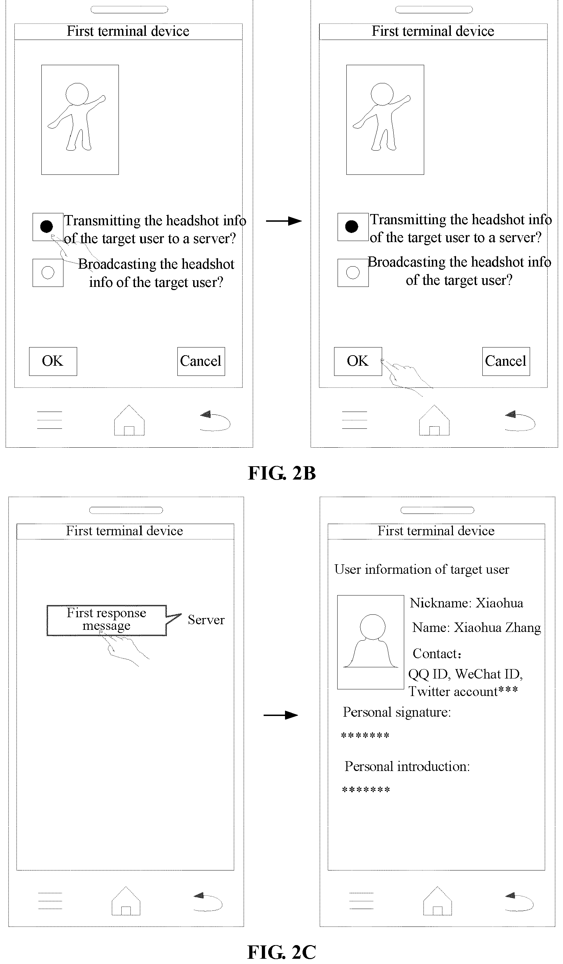

Fig. 2A is a flow chart of another method for acquiring user information according to another exemplary embodiment, and Figs. 2B-2D are schematic diagrams illustrating interfaces displayed when implementing the exemplary embodiment of Fig. 2A. On the basis of the embodiment described above, as shown in Fig. 2A, the detailed implementation of step S102 may further include the following steps.

In step S201, the headshot information of the target user is transmitted to a server to instruct the server to, according to the headshot information of the target user, inquire whether the server includes the user information of the target user.

Particularly, the user information may include headshot information and profile information of the target user.

Typically, the server may have stored at least one user's user information (information that is allowable to disclose by the at least one user). The stored user information may include headshot information of the user, profile information of the user, and the like. In this step, after the terminal device is operated to open a headshot information based user recognition software, by transmitting the headshot information of the target user as obtained in step S101 to the server (as shown in Fig. 2B, clicking a selection block of "transmitting the headshot information of the target user to a server", and then clicking the "OK" button), the headshot information of the target user is used to instruct the server to, according to the headshot information of the target user, inquire whether the server includes the user information of the target user. In the case of the server having stored the user information of the target user, the server will transmit a first response message containing the user information of the target user; correspondingly, the terminal device performs step S202. In the case of the server having not stored the user information of the target user, the server will transmit a second response message indicating that indicates that the server does not include the user information of the target user; correspondingly, the terminal device performs step S203.

In step S202, a first response message returned from the server is received (as shown in Fig. 2C), wherein the first response message contains the user information of the target user.

In step S203, a second response message returned from the server is received, wherein the second response message indicates that the server does not include the user information of the target user.

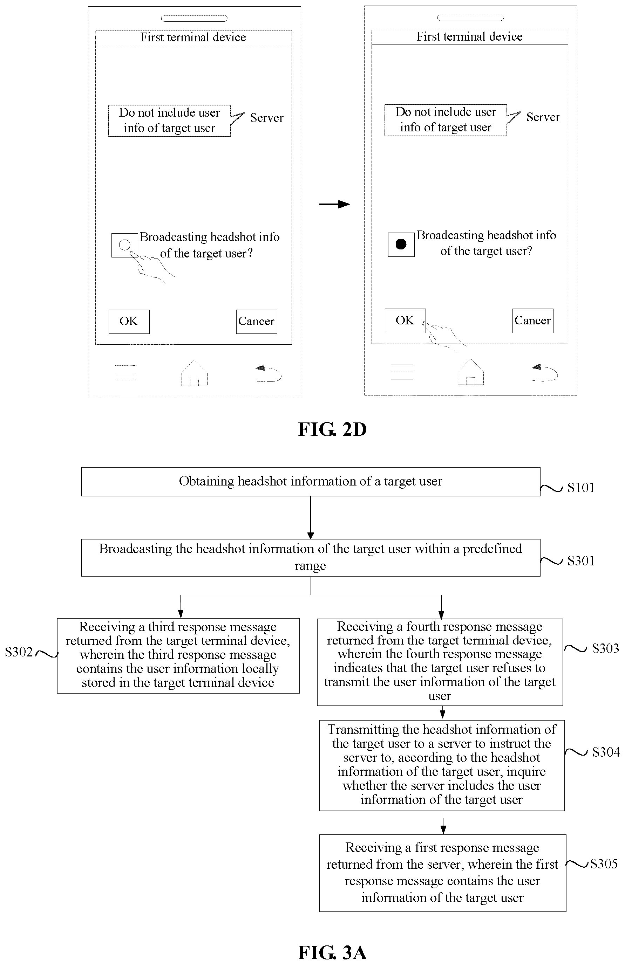

Additionally, in the case that the terminal device does not acquire user information of the target user, the terminal device may further seek to acquire user information of the target user by a way of broadcasting the headshot information of the target user within a predefined range (as shown in Fig. 2D, clicking a selection block of "broadcasting the headshot information of the target user", and then clicking the "OK" button), the detailed steps are described as follows.

In step S204, the headshot information of the target user is broadcasted within a predefined range.

Particularly, a target terminal device corresponding to the target user is located within the predefined range.

In this step, the terminal device (for ease of description, this terminal device is referred to as "first terminal device" hereinafter) broadcasts the headshot information of the target user within the predefined range (optionally, the headshot information based user recognition software may have a broadcast function). Additionally or alternatively, the headshot information of the target user as obtained in step S101 may be broadcasted via Bluetooth® or WiFi® etc. In such way, a terminal device capable of receiving the headshot information of the target user within the predefined range (for ease of description, this type of terminal device is referred to as "second terminal device" hereinafter), in accordance with the headshot information of the target user and headshot information stored in the second terminal device (which uniquely identifies a user having the second terminal device), may determine whether the second terminal device is the target terminal device corresponding to the target user, i.e., determining whether the headshot information of the target user and headshot information stored in the second terminal device identify a same user. In the case that the headshot information of the target user and headshot information stored in the second terminal device identify the same user (i.e., the second terminal device is the target terminal device), a third response message containing the user information locally stored in the target terminal device (i.e., the user information of the target user) is transmitted to the first terminal device; correspondingly, the first terminal device performs step S205. Alternatively or additionally, the second terminal device may be preconfigured to be allowed to respond to other terminal devices with user information of a user corresponding to the second terminal device (i.e., a user having the second terminal device), i.e., when the first terminal device transmits to the second terminal device headshot information of its user, the second terminal device may automatically return a response message containing user information to the first terminal device. In an alternative embodiment, before the second terminal device transmits the third response message to the first terminal device, the second terminal device may inform its corresponding user of: a request transmitted from the first terminal device wants to acquire the user information of the user, whether it is allowable to transmit the user information to the first terminal device. In the case that the user allows to transmit user information to the first terminal device, the second terminal device may transmit the third response message to the first terminal device. In the case that the user refuses to transmit user information to the first terminal device, the second terminal device may transmit to the first terminal device a fourth response message, which indicates that the user corresponding to the second terminal device (i.e., the target device) refuses to transmit user information to the first terminal device.

Additionally or alternatively, if the headshot information of the target user and headshot information stored in the second terminal device identify two different users respectively (i.e., the second terminal device is not the target terminal device), the second terminal device will not transmit any response message to the first terminal device.

In step S205, the third response message returned from the target terminal device is received, wherein the third response message contains the user information locally stored in the target terminal device.

Additionally or alternatively, in these embodiments, if the user information of the target user as acquired by the first terminal device from the server does not have enough information content, the first terminal device may further broadcast the headshot information of the target user within a predefined range so as to acquire more user information of the target user. The details about the broadcasting have been described with respect to the step S204, which will not be repeated at here.

Additionally or alternatively, in step S201, the target user's encrypted headshot information (i.e., the headshot information of the target user as obtained in step S101 is encrypted, which results in the encrypted headshot information of the target user) may be transmitted to the server, such that the server may inquire whether the server includes the user information of the target user in accordance with the decrypted headshot information. Optionally, in step S204, the target user's encrypted headshot information is broadcasted within the predefined range.

Methods of acquiring user information are provided in these embodiments. By combining a way of acquiring the user information of the target user from the server and another way of broadcasting the headshot information of the target user so as to acquire the user information of the target user, the user information of the target user may be acquired. As can be seen, the user information of the target user can be accurately acquired, and thus the user's experience can be improved.

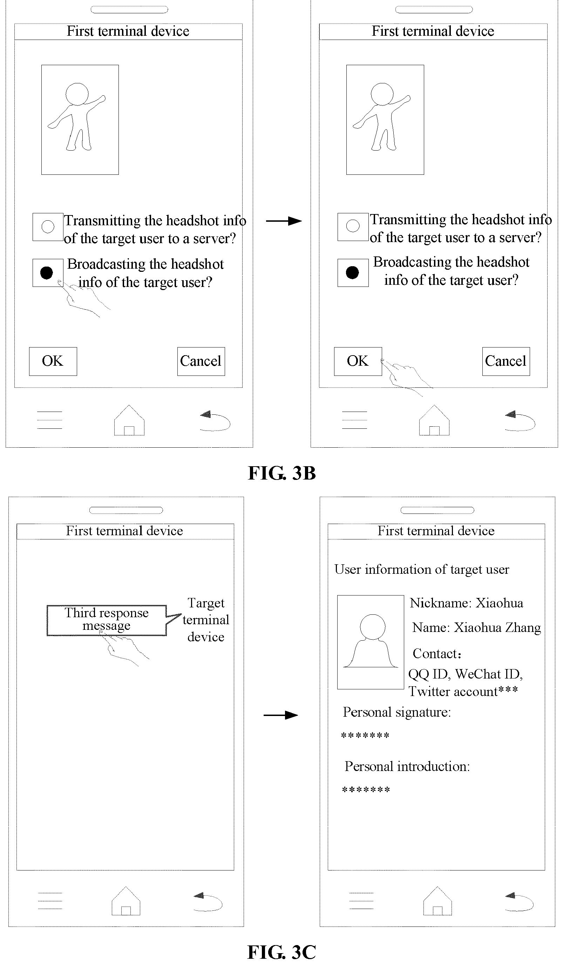

Fig. 3A is a flow chart of another method for acquiring user information according to another exemplary embodiment, and Figs. 3B-3D are schematic diagrams illustrating interfaces displayed when implementing the exemplary embodiment of Fig. 3A. On the basis of the embodiment described above, as shown in Fig. 3A, the detailed implementation of step S102 may further include the following steps.

In step S301, the headshot information of the target user is broadcasted within a predefined range.

Particularly, a target terminal device corresponding to the target user is located within the predefined range.

In this step, the terminal device (for ease of description, this terminal device is referred to as "first terminal device" hereinafter) broadcasts the headshot information of the target user within the predefined range (as shown in Fig. 3B, clicking a selection block of "broadcasting the headshot information of the target user", and then clicking the "OK" button, optionally, the headshot information based user recognition software may have a broadcast function). Additionally or alternatively, the headshot information of the target user as obtained in step S101 may be broadcasted via Bluetooth® or WiFi® etc. In such ways, a terminal device capable of receiving the headshot information of the target user within the predefined range (for ease of description, this type of terminal device is referred to as "second terminal device" hereinafter), in accordance with the headshot information of the target user and headshot information stored in the second terminal device (which uniquely identifies a user having the second terminal device), may determine whether the second terminal device is the target terminal device corresponding to the target user. In the case that the second terminal device is the target terminal device, a third response message containing the user information locally stored in the target terminal device (i.e., the user information of the target user) is transmitted to the first terminal device; correspondingly, the terminal device performs step S302. Alternatively or additionally, the second terminal device may be preconfigured to be allowed to respond to other terminal devices with user information of itself, i.e., when the first terminal device transmits to the second terminal device headshot information of its user, the second terminal device may automatically return a response message containing user information of itself to the first terminal device. In an alternative embodiment, before the second terminal device transmits the third response message to the first terminal device, the second terminal device may inform its user of: a request transmitted from the first terminal device wants to acquire the user information of the user, whether it is allowable to transmit the user information to the first terminal device. In the case that the user allows to transmit user information to the first terminal device, the second terminal device may transmit the third response message to the first terminal device. In the case that the user refuses to transmit user information to the first terminal device, the second terminal device may transmit to the first terminal device a fourth response message, which indicates that the user corresponding to the second terminal device (i.e., the target device) refuses to transmit user information to the first terminal device; correspondingly, the terminal device performs step S303.

In step S302, the third response message returned from the target terminal device is received (as shown in Fig. 3C), wherein the third response message contains the user information locally stored in the target terminal device.

In step S303, the fourth response message returned from the target terminal device is received, wherein the fourth response message indicates that the target user refuses to transmit the user information of the target user

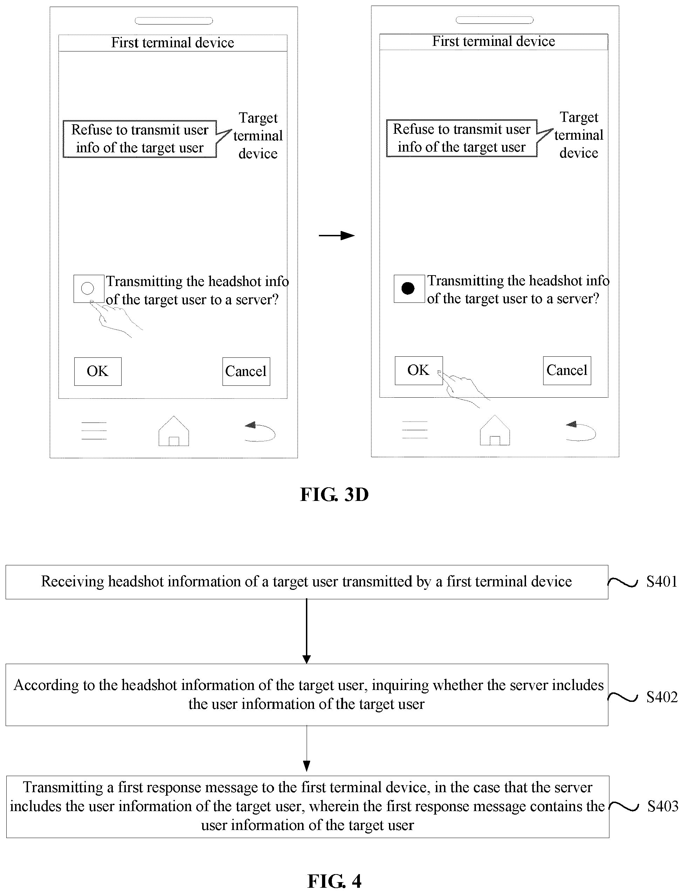

Additionally, after the terminal device does not acquire user information of the target user by the way of broadcasting the headshot information of the target user, the terminal device may further seek to acquire user information of the target user from a server (as shown in Fig. 3D, clicking a selection block of "transmitting the headshot information of the target user to a server", and then clicking the "OK" button), the detailed steps are described as follows.

In step S304, the headshot information of the target user is transmitted to the server to instruct the server to, according to the headshot information of the target user, inquire whether the server includes the user information of the target user.

Particularly, the user information may include headshot information and profile information of the target user.

Typically, the server may have stored at least one user's user information (information that is allowable to disclose by the at least one user). The stored user information may include headshot information of the user, profile information of the user, and the like. In this step, after the terminal device is operated to open a headshot information based user recognition software, by transmitting the headshot information of the target user as obtained in step S101 to the server, the server is enabled to, according to the headshot information of the target user, inquire whether the server includes the user information of the target user. In the case of the server having stored the user information of the target user, the server will transmit a first response message containing the user information of the target user; correspondingly, the terminal device performs step S305. In the case of the server having not stored the user information of the target user, the server will transmit a second response message indicating that indicates that the server does not include the user information of the target user.

In step S305, a first response message returned from the server is received, wherein the first response message contains the user information of the target user.

Additionally or alternatively, in step S301, the target user's encrypted headshot information (i.e., the headshot information of the target user as obtained in step S101 is encrypted, which results in the encrypted headshot information of the target user) may be broadcasted within the predefined range. Optionally, in step S304, the target user's encrypted headshot information may be transmitted to the server, such that the server may inquire whether the server includes the user information of the target user in accordance with the decrypted headshot information.

Methods of acquiring user information are provided in these embodiments. By combining a way of broadcasting the headshot information of the target user so as to acquire the user information of the target user and another way of acquiring the user information of the target user from the server, the user information of the target user may be acquired. As can be seen, the user information of the target user can be accurately acquired, and thus the user's experience can be improved.

Fig. 4 is a flow chart of another method for acquiring user information according to an exemplary embodiment, and this method may be applied in a server for providing user information of a target user for various kinds of terminal devices within which a headshot information based user recognition software is installed. As shown in Fig. 4, on the basis of the embodiments described with respect to Figs. 1A to 3A, the operations on the server side are specifically illustrated, which may include the following steps.

In step S401, the server may receive headshot information of a target user transmitted by a first terminal device.

In step S402, according to the headshot information of the target user, the server inquires whether the server includes user information of the target user.

Particularly, the user information includes headshot information and profile information of the target user.

In step S403, in the case that the server includes the user information of the target user, the server transmits a first response message to the first terminal device, wherein the first response message contains the user information of the target user.

Typically, the server may have stored at least one user's user information (information that is allowable to disclose by the at least one user). The stored user information may include headshot information of the user, profile information of the user, and the like. In step S401, the server receives the headshot information of the target user transmitted by the terminal device after being operated to open a headshot information based user recognition software. Optionally, the headshot information of the target user received by the server may be encrypted headshot information of the target user. Additionally or alternatively, before step S401, the method may further include: acquiring and saving at least one user's user information, such that the server can match the received headshot information of the target user transmitted from any terminal device with the locally stored headshot information of users. Optionally, the server may be a cloud server.

In step S402, the server according to the headshot information of the target user, the server inquires whether the server includes user information of the target user. Optionally, the server may determine whether the server includes the user information of the target user by respectively compare the headshot information of the target user with headshot information of every user as stored in the server. In the case that both the headshot information of the target user and headshot information of user A as stored in the server identify a same user (i.e., the user A is the target user, that is to say, the server contains the user information of the target user), the server transmits a first response message to the first terminal device, which includes the user information of the target user as stored in the server (i.e., step S403). In the case that the headshot information of the target user and headshot information of user A as stored in the server identify different users (i.e., the server does not contain the user information of the target user), the sever may transmit a second response message to the first terminal device (wherein the second response message indicates that the server does not include the user information of the target user).

Additionally or alternatively, if the headshot information received by the server is encrypted headshot information, correspondingly, before step S402, the method may further include: decrypting the received encrypted headshot information of the target user so as to have decrypted headshot information of the target user. Accordingly, the step S402 may include: inquiring, according to the decrypted headshot information of the target user, whether the server includes the user information of the target user.

A method of acquiring user information is provided in this embodiment. With the steps of receiving headshot information of a target user transmitted by a first terminal device, inquiring, according to the headshot information of the target user, whether the server includes the user information of the target user, and transmitting a first response message to the first terminal device, in the case that the server includes the user information of the target user, the first terminal device is capable of accurately acquiring the user information of the target user, and thus the user's experience can be improved.

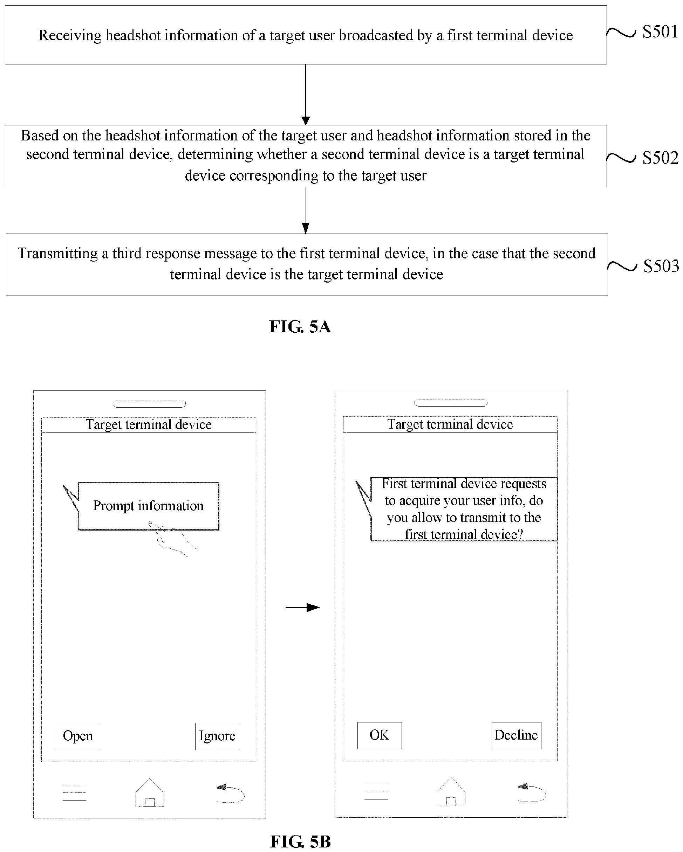

Fig. 5A is a flow chart of another method for acquiring user information according to an exemplary embodiment; and Fig. 5B is a schematic diagram illustrating an interface displayed when implementing the exemplary embodiment of Fig. 5A. As shown in Fig. 5A, on the basis of the embodiments described with respect to Figs. 1A to 3A, the operations performed on a second terminal device side are specifically illustrated, which may include the following steps.

In step S501, a second terminal device receives headshot information of a target user broadcasted by a first terminal device.

In step S502, based on the headshot information of the target user and headshot information stored in the second terminal device, the second terminal device determines whether the second terminal device is a target terminal device corresponding to the target user.

In step S503, in the case that the second terminal device is the target terminal device, the second terminal device transmits a third response message to the first terminal device.

Particularly, the third response message contains the user information locally stored in the target terminal device, and the user information includes headshot information and profile information of the target user.

In the embodiments of the present disclosure, in step S501, a second terminal device may receive headshot information of a target user broadcasted by a first terminal device after being operated to open a headshot information based user recognition software. Optionally, the first terminal device may broadcast the headshot information of the target user within a predefined range via Bluetooth® or WiFi® etc. Accordingly, the second terminal may receive the headshot information of the target user in a corresponding manner (i.e., in the same manner as the broadcasting of the first terminal device). Optionally, if this headshot information based user recognition software in the second terminal device has not been started when the second terminal device receives headshot information of a target user broadcasted by another terminal device (for example, the first terminal device), the headshot information based user recognition software may be automatically started in the second terminal device, in order to further determine whether the second terminal device is the target terminal device. Optionally, the headshot information of the target user received by the second terminal device may be headshot information that has been encrypted by the first terminal device.

In the step S502, said determining whether the second terminal device is the target terminal device corresponding to the target user is to determine whether both the headshot information of the target user and headshot information stored in the second terminal device identify a same user. In the case that the headshot information of the target user and headshot information stored in the second terminal device identify the same user (i.e., the second terminal device is the target terminal device), a third response message containing the user information locally stored in the target terminal device (i.e., the user information of the target user) is transmitted to the first terminal device (i.e., step S503). Alternatively or additionally, the second terminal device may be preconfigured to be allowed to respond to other terminal devices with user information of a user corresponding to the second terminal device (i.e., when the first terminal device transmits to the second terminal device headshot information of its user, the second terminal device may automatically return a response message containing user information to the first terminal device). In an alternative embodiment, before the second terminal device transmits the third response message to the first terminal device, the second terminal device may inform its corresponding user (i.e., the target user) of (as shown in Fig. 5B): a request transmitted from the first terminal device wants to acquire the user information of the user, whether it is allowable to transmit the user information to the first terminal device. In the case that the user allows to transmit user information to the first terminal device, the second terminal device may transmit the third response message to the first terminal device. In the case that the user refuses to transmit user information to the first terminal device (i.e., the second terminal device is the target terminal device, but the target user refuses to transmit user information of the target user to the first terminal device), the second terminal device may transmit to the first terminal device a fourth response message, which indicates that the user corresponding to the second terminal device (i.e., the target device) refuses to transmit user information to the first terminal device.

Additionally or alternatively, if the headshot information of the target user and any headshot information stored in the second terminal device identify two different users respectively (i.e., the second terminal device is not the target terminal device), the second terminal device will not transmit any response message to the first terminal device.

Additionally or alternatively, if the headshot information received by the second terminal device is encrypted headshot information, correspondingly, before step S502, the method may further include: decrypting the received encrypted headshot information of the target user so as to have decrypted headshot information of the target user. Accordingly, the step S502 may include: determining whether a second terminal device is a target terminal device corresponding to the target user, based on the decrypted headshot information of the target user and headshot information stored in the second terminal device.

A method of acquiring user information is provided in this embodiment. With the steps of receiving headshot information of a target user broadcasted by a first terminal device, determining whether a second terminal device is a target terminal device corresponding to the target user, based on the headshot information of the target user and headshot information stored in the second terminal device, and transmitting a third response message to the first terminal device, in the case that the second terminal device is the target terminal device, the first terminal device is capable of accurately acquiring the user information of the target user, and thus the user's experience can be improved.

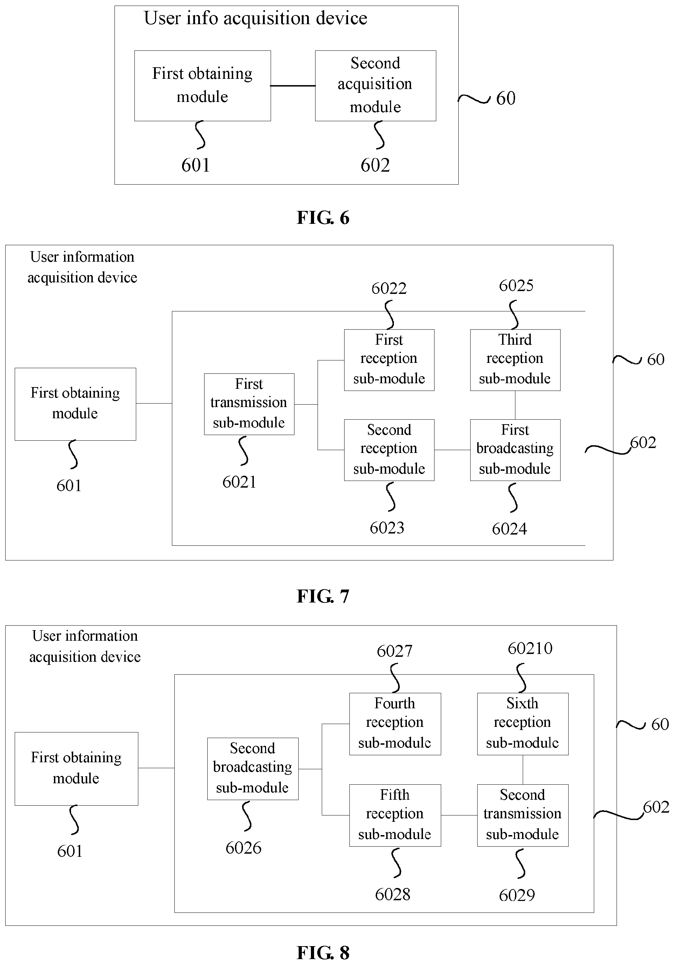

Fig. 6 is a block diagram of a device for acquiring user information according to an exemplary embodiment. As shown in Fig. 6, this user information acquisition device 60 includes: a first obtaining module 601 configured to obtain headshot information of a target user; and a second acquisition module 602 configured to acquire user information of the target user, based on the headshot information obtained by the first obtaining module 601 and a predefined set of acquisition policies, wherein the predefined set of acquisition policies includes at least one acquisition policy, and each of the acquisition policies indicates a respective way of acquiring user information of the target user.

A user information acquisition device is provided in the present embodiment. By a first obtaining module obtaining headshot information of a target user, and by a second acquisition module acquiring user information of the target user based on the headshot information obtained by the first obtaining module 601 and a predefined set of acquisition policies, the user information of the target user can be accurately acquired, and thus the user's experience can be improved.

On the basis of the embodiment shown in Fig. 6, Fig. 7 is a block diagram of another device for acquiring user information according to an exemplary embodiment. Referring to Fig. 7, the second acquisition module 602 may include: a first transmission sub-module 6021 configured to transmit the headshot information obtained by the first obtaining module 601 to a server to instruct the server to, according to the headshot information of the target user, inquire whether the server includes the user information of the target user, wherein the user information includes headshot information and profile information of the target user; and a first reception sub-module 6022 configured to receive a first response message returned from the server, wherein the first response message contains the user information of the target user.

Additionally or alternatively, the second acquisition module 602 may further include: a second reception sub-module 6023 configured to receive a second response message returned from the server, wherein the second response message indicates that the server does not include the user information of the target user; a first broadcasting sub-module 6024 configured to broadcast the headshot information obtained by the first obtaining module 601 within a predefined range in which a target terminal device corresponding to the target user is located; and a third reception sub-module 6025 configured to receive a third response message returned from the target terminal device, wherein the third response message contains the user information locally stored in the target terminal device.

A user information acquisition device is provided in the present embodiment. By the way of acquiring the user information of the target user in combination with acquiring the user information of the target user by broadcasting the headshot information of the target user, the second acquisition module may acquire the user information of the target user. As can be seen, the user information of the target user can be accurately acquired, and thus the user's experience can be improved.

On the basis of the embodiment shown in Fig. 6, Fig. 8 is a block diagram of another device for acquiring user information according to an exemplary embodiment. Referring to Fig. 8, the second acquisition module 602 may include: a second broadcasting sub-module 6026 configured to broadcast the headshot information obtained by the first obtaining module 601 within a predefined range in which a target terminal device corresponding to the target user is located; and a fourth reception sub-module 6027 configured to receive a third response message returned from the target terminal device, wherein the third response message contains the user information locally stored in the target terminal device.

Additionally or alternatively, the second acquisition module 602 may further include: a fifth reception sub-module 6028 configured to receive a fourth response message returned from the target terminal device, wherein the fourth response message indicates that the target user refuses to transmit the user information of the target user; a second transmission sub-module 6029 configured to transmit the headshot information obtained by the first obtaining module 601 to a server to instruct the server to, according to the headshot information of the target user, inquire whether the server includes the user information of the target user, wherein the user information includes headshot information and profile information of the target user; and a sixth reception sub-module 60210 configured to receive a first response message returned from the server, wherein the first response message contains the user information of the target user.

A user information acquisition device is provided in the present embodiment. By the way of acquiring the user information of the target user by broadcasting the headshot information of the target user in combination with acquiring the user information of the target user, the second acquisition module may acquire the user information of the target user. As can be seen, the user information of the target user can be accurately acquired, and thus the user's experience can be improved.

Any of the user information acquisition devices provided in the above embodiments is used to implement the technical solutions of the method embodiments shown in Figs. 1 to 3, the principles of which are similar to their technical effects, i.e., through obtaining headshot information of the target user, and acquiring the user information of the target user by broadcasting the headshot information of the target user in combination with acquiring the user information of the target user from the server, the user information of the target user can be acquired. As can be seen, the user information of the target user can be accurately acquired, and thus the user's experience can be improved.

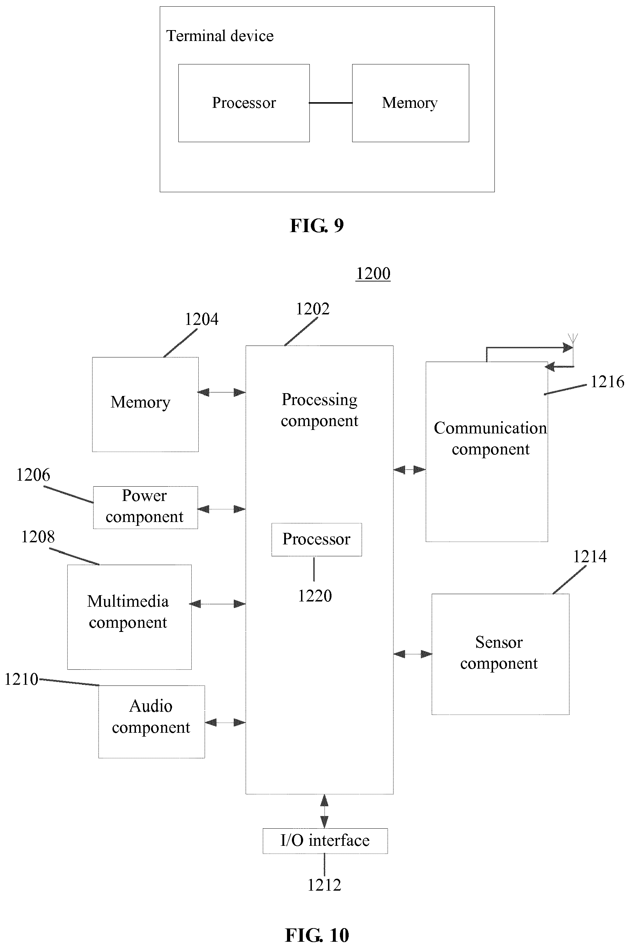

The above descriptions illustrate internal functional modules and schematic structures of devices for acquiring user information, and those devices are actually practiced by a terminal device (optionally, the terminal device may be the first terminal device). Fig. 9 is a block diagram of a physical entity of a terminal device according to an exemplary embodiment. Referring to Fig. 9, this terminal device may be specifically implemented as a processor and a memory for storing instructions executable by the processor, wherein the processor is configured to: obtaining headshot information of a target user; and acquiring user information of the target user, based on the headshot information of the target user and a predefined set of acquisition policies, wherein the predefined set of acquisition policies includes at least one acquisition policy, and each of the acquisition policies indicates a respective way of acquiring user information of the target user.

In the above embodiment of the terminal device, it should be appreciated that the processor may be Central Processing Unit (simplified as CPU), or other general-purpose processors, Digital Signal Processing (simplified as DSP), Application Specific Integrated Circuit (simplified as ASIC) or the like. The general-purpose processor may be microprocessor or the processor may be other common processor, etc. The above mentioned memory may be read-only memory (simplified as ROM), random access memory (simplified as RAM), flash memory, hard disk or solid-state disk. A SIM card is also known as Subscriber Identity Module or smart card, and a digital mobile phone has to install such a card to function normally. Accordingly, there stores following contents in a computer chip: information of the digital mobile phone's owner, encryption key(s), and telephone book, etc. The steps of method disclosed in conjunction with the embodiments of the disclosure may be embodied to be performed by hardware processors, or be performed by the combination of the hardware and software module in the processor.

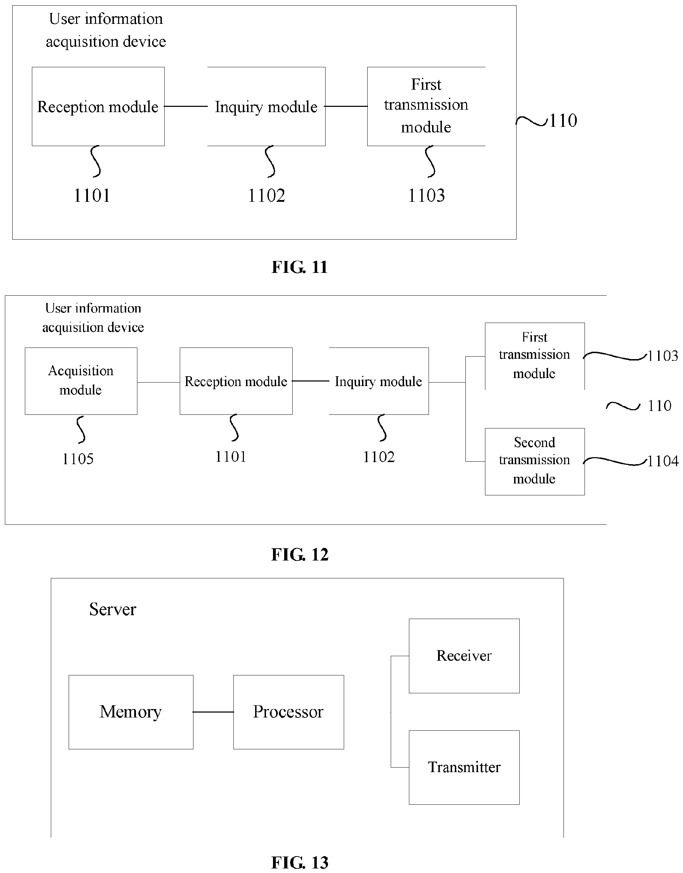

Fig. 10 is a block diagram of a terminal device 1200 according to an exemplary embodiment. For example, this user information acquisition device may be a terminal device capable of acquiring user information of a target user, such as mobile phone, a computer, a tablet computer, and etc. Referring to Fig. 12, the terminal device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the terminal device 1200, such as the operations associated with display, data communications, multimedia operations, and recording operations. The processing component 1202 may include one or more processors 1420 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the terminal device 1200. Examples of such data include instructions, various data, messages, pictures, video, etc., for any applications or methods operated on the terminal device 1200. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the terminal device 1200. The power component 1206 may include a power management system, one or more power sources, and any other components associated with the generation, management, and distribution of power in the terminal device 1200.

The multimedia component 1208 includes a screen providing an output interface between the terminal device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action.

The audio component 1210 is configured to output and/or input audio signals. For example, the audio component 1210 includes a microphone ("MIC") configured to receive an external audio signal when the terminal device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like.

The sensor component 1214 includes one or more sensors to provide status assessments of various aspects of the terminal device 1200. For instance, the sensor component 1214 may detect an open/closed status of the terminal device 1200, relative positioning of components, e.g., the display and the keypad, of the terminal device 1200, a change in position of the terminal device 1200 or a component of the terminal device 1200, a presence or absence of user contact with the terminal device 1200, an orientation or an acceleration/deceleration of the terminal device 1200, and a change in temperature of the terminal device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the terminal device 1200 and other devices. The terminal device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1418 in the terminal device 1200, for performing the above-described methods. For example, the non-transitory computer-readable storage medium may be a ROM, a RAM, a CD-ROM, a magnetic tape, a floppy disc, an optical data storage device, and the like.

There is provided a non-transitory computer-readable storage medium including instructions that, when executed by the processing component within the user information acquisition device, cause the user information acquisition device to perform a method for acquiring user information, the method including: obtaining headshot information of a target user; and acquiring user information of the target user, based on the headshot information of the target user and a predefined set of acquisition policies, wherein the predefined set of acquisition policies includes at least one acquisition policy, and each of the acquisition policies indicates a respective way of acquiring user information of the target user.

Additionally, the acquiring may include: transmitting the headshot information of the target user to a server to instruct the server to, according to the headshot information of the target user, inquire whether the server includes the user information of the target user, wherein the user information includes headshot information and profile information of the target user; and receiving a first response message returned from the server, wherein the first response message contains the user information of the target user.

Alternatively or additionally, after transmitting the headshot information of the target user to the server, the method may further include: receiving a second response message returned from the server, wherein the second response message indicates that the server does not include the user information of the target user; broadcasting the headshot information of the target user within a predefined range in which a target terminal device corresponding to the target user is located; and receiving a third response message returned from the target terminal device, wherein the third response message contains the user information locally stored in the target terminal device.

In an alternative embodiment, the acquiring may include: broadcasting the headshot information of the target user within a predefined range in which a target terminal device corresponding to the target user is located; and receiving a third response message returned from the target terminal device, wherein the third response message contains the user information locally stored in the target terminal device.

Alternatively or additionally, after broadcasting the headshot information of the target user within the predefined range, the method may further include: receiving a fourth response message returned from the target terminal device, wherein the fourth response message indicates that the target user refuses to transmit the user information of the target user; transmitting the headshot information of the target user to a server to instruct the server to, according to the headshot information of the target user, inquire whether the server includes the user information of the target user, wherein the user information includes headshot information and profile information of the target user; and receiving a first response message returned from the server, wherein the first response message contains the user information of the target user.

Fig. 11 is a block diagram of another device for acquiring user information according to an exemplary embodiment. As shown in Fig. 11, this user information acquisition device 110 includes: a reception module 1101 configured to receive headshot information of a target user transmitted by a first terminal device; an inquiry module 1102 configured to inquire, according to the headshot information received by the reception module 1101, whether the server includes the user information of the target user, wherein the user information includes headshot information and profile information of the target user; and a first transmission module 1103 configured to transmit a first response message to the first terminal device, in the case that the inquiry module 1102 determines that the server includes the user information of the target user, wherein the first response message contains the user information of the target user.

In the user information acquisition device as provided by the present embodiment, the reception module receives headshot information of a target user transmitted by a first terminal device; according to the headshot information received by the reception module, the inquiry module inquires whether the server includes the user information of the target user; and in the case that the inquiry module determines that the server includes the user information of the target user, the first transmission module transmit to the first terminal device, a first response message containing the user information of the target user. Accordingly, the first terminal device can acquire accurate user information of the target user, and thus the user experience can be improved.

On the basis of the above embodiment shown in Fig. 11, Fig. 12 is a block diagram of another device for acquiring user information according to an exemplary embodiment. Referring to Fig. 12, the device may further include a second transmission module 1104 configured to transmit a second response message to the first terminal device, in the case that the inquiry module 1102 determines that the server does not include the user information of the target user, wherein the second response message indicates that the server does not include the user information of the target user.

Additionally, the device may further include an acquisition module 1105 configured to acquire and save at least one user's user information.

Any of the user information acquisition devices provided in the above embodiments is used to implement the technical solution of the method embodiment shown in Fig. 4, the principle of which is similar to its technical effects, i.e., through receiving headshot information of a target user transmitted by a first terminal device, inquiring, according to the headshot information received by the reception module, whether the server includes the user information of the target user, and in the case that the inquiry module determines that the server includes the user information of the target user, transmitting to the first terminal device, a first response message containing the user information of the target user. Accordingly, the first terminal device can acquire accurate user information of the target user, and thus the user experience can be improved.

The above descriptions illustrate internal functional modules and schematic structures of devices for acquiring user information, and those devices are actually practiced by a server. Fig. 13 is a block diagram of a physical entity of a server according to an exemplary embodiment. Referring to Fig. 13, this server may be specifically implemented as a transmitter, a receiver, a processor, and a memory for storing instructions executable by the processor, wherein: the receiver is configured to receive headshot information of a target user transmitted by a first terminal device; the processor is configured to inquire, according to the headshot information of the target user, whether the server includes the user information of the target user, wherein the user information includes headshot information and profile information of the target user; and the transmitter is configured to transmit a first response message to the first terminal device, in the case that the server includes the user information of the target user, wherein the first response message contains the user information of the target user.

In the above embodiment of the server, it should be appreciated that the processor may be Central Processing Unit (simplified as CPU), or other general-purpose processors, Digital Signal Processing (simplified as DSP), Application Specific Integrated Circuit (simplified as ASIC) or the like. The general-purpose processor may be microprocessor or the processor may be other common processor, etc. The above mentioned memory may be read-only memory (simplified as ROM), random access memory (simplified as RAM), flash memory, hard disk or solid-state disk. The steps of method disclosed in conjunction with the embodiments of the disclosure may be embodied to be performed by hardware processors, or be performed by the combination of the hardware and software module in the processor.

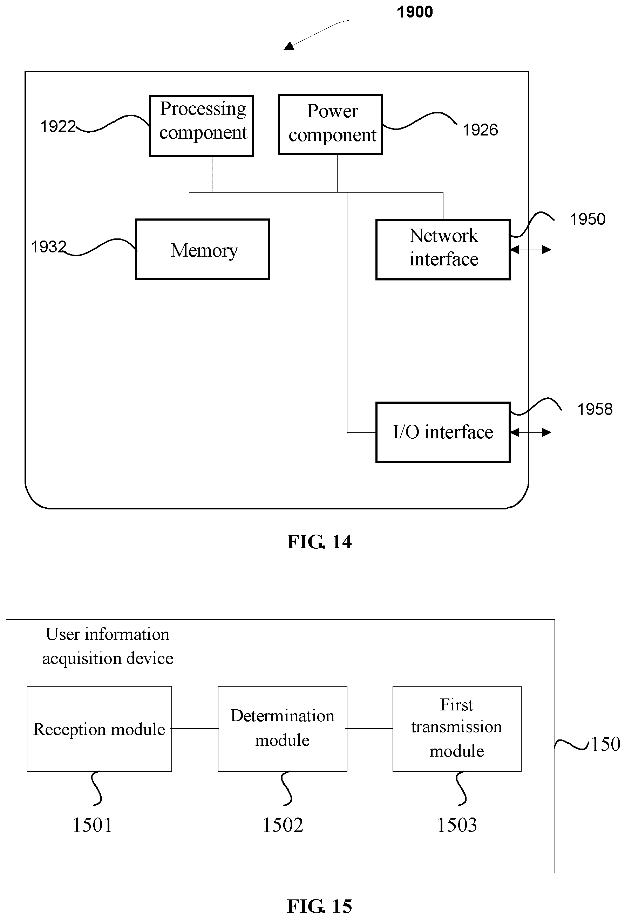

Fig. 14 is a block diagram of a server 1900 according to an exemplary embodiment. Referring to Fig. 14, the server 1900 may include a processing component 1922 (may further include one or more processors), and memory 1932 representative of memory resources, for storing instructions executable by the processing component 1922 (e.g., an application program). The application program stored in the memory 1932 may include one or more modules, each of which corresponds to a set of instructions. Further, the processing component 1922 may be configured to execute the sets of instructions to perform those steps of the user information acquisition method shown in Fig. 4.

The device 1900 may also include a power component 1926 configured to perform power supply management of server 1900, a wired or wireless network interfaces 1950 configured to connect the server 1900 to the network, and an input/output interfaces 1958. The server may operate operating systems (such as Windows Server^{™}, Mac OS X^{™}, Unix^{™}, Linux^{™}, FreeBSD^{™}, or the like) stored in the memory 1932.

Fig. 15 is a block diagram of another device for acquiring user information according to an exemplary embodiment. As shown in Fig. 15, this user information acquisition device 150 includes: a reception module 1501 configured to receive headshot information of a target user broadcasted by a first terminal device; a determination module 1502 configured to determine whether a second terminal device is a target terminal device corresponding to the target user, based on the headshot information received by the reception module 1501 and headshot information stored in the second terminal device; and a first transmission module 1503 configured to transmit a third response message to the first terminal device, in the case that the determination module 1502 determines that the second terminal device is the target terminal device, wherein the third response message contains the user information locally stored in the target terminal device, and the user information includes headshot information and profile information of the target user.

In the user information acquisition device as provided by the present embodiment, the reception module receives headshot information of a target user broadcasted by a first terminal device; the determination module determines whether a second terminal device is a target terminal device corresponding to the target user, based on the headshot information received by the reception module and headshot information stored in the second terminal device; and in the case that the determination module determines that the second terminal device is the target terminal device, the first transmission module transmits a third response message to the first terminal device, wherein the third response message contains the user information locally stored in the target terminal device. Accordingly, the first terminal device can acquire accurate user information of the target user, and thus the user experience can be improved.

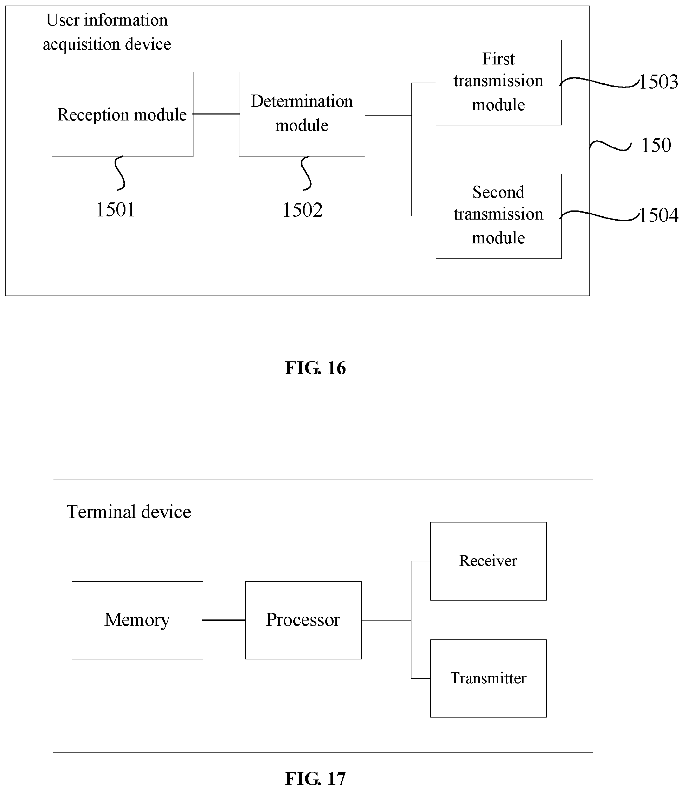

On the basis of the above embodiment shown in Fig. 15, Fig. 16 is a block diagram of another device for acquiring user information according to an exemplary embodiment. Referring to Fig. 16, the device may further include a second transmission module 1504 configured to transmit a fourth response message to the first terminal device, in the case that the determination module 1502 determines that the second terminal device is the target terminal device and the target user refuses to transmit the user information of the target user to the first terminal device, wherein the fourth response message indicates that the target user refuses to transmit the user information of the target user..

Any of the user information acquisition devices provided in the above embodiments is used to implement the technical solution of the method embodiment shown in Fig. 5, the principle of which is similar to its technical effects, i.e., through receiving headshot information of a target user broadcasted by a first terminal device, determining whether a second terminal device is a target terminal device corresponding to the target user, based on the headshot information received by the reception module and headshot information stored in the second terminal device, and in the case that the determination module determines that the second terminal device is the target terminal device, transmitting to the first terminal device, a third response message containing the user information locally stored in the target terminal device. Accordingly, the first terminal device can acquire accurate user information of the target user, and thus the user experience can be improved.

The above descriptions illustrate internal functional modules and schematic structures of devices for acquiring user information, and those devices are actually practiced by a terminal device (for example, the terminal device is the second terminal device). Fig. 17 is a block diagram of another physical entity of a terminal device according to an exemplary embodiment. Referring to Fig. 17, this terminal device may be specifically implemented as a transmitter, a receiver, a processor, and a memory for storing instructions executable by the processor, wherein: the receiver is configured to receive headshot information of a target user broadcasted by a first terminal device; the processor is configured to determine whether a second terminal device is a target terminal device corresponding to the target user, based on the headshot information received by the reception module and headshot information stored in the second terminal device; and the transmitter is configured to transmit a third response message to the first terminal device, in the case that the determination module determines that the second terminal device is the target terminal device, wherein the third response message contains the user information locally stored in the target terminal device, and the user information includes headshot information and profile information of the target user.

Optionally, the block diagram of this terminal device may refer to the contents shown in Fig. 10, which will not be repeated here.

In exemplary embodiments, there is also provided a non-transitory computer-readable storage medium including instructions, such as a memory containing instructions, the above instructions are executable by a processor in a terminal device for performing the above-described methods. For example, the non-transitory computer-readable storage medium may be a ROM, a RAM, a CD-ROM, a magnetic tape, a floppy disc, an optical data storage device, and the like.

There is provided a non-transitory computer-readable storage medium including instructions that, when executed by a processing component within a user information acquisition device, cause the user information acquisition device to perform a method for acquiring user information, the method including: receiving headshot information of a target user broadcasted by a first terminal device; determining whether a second terminal device is a target terminal device corresponding to the target user, based on the headshot information of the target user and headshot information stored in the second terminal device; and transmitting a third response message to the first terminal device, in the case that the second terminal device is the target terminal device, wherein the third response message contains the user information locally stored in the target terminal device, and the user information includes headshot information and profile information of the target user.

In an alternative embodiment, after determining whether the second terminal device is the target terminal device corresponding to the target user, the method may further include: transmitting a fourth response message to the first terminal device, in the case that the second terminal device is the target terminal device and the target user refuses to transmit the user information of the target user to the first terminal device, wherein the fourth response message indicates that the target user refuses to transmit the user information of the target user.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. The specification and embodiments are merely considered to be exemplary and the substantive scope of the disclosure is limited only by the appended claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for acquiring user information carried out in a terminal device, the method comprising:
obtaining (S101) headshot information of a target user; and
acquiring (S102) user information of the target user, based on the headshot information of the target user and a predefined set of acquisition policies, wherein the predefined set of acquisition policies includes at least one acquisition policy, and each of the acquisition policies indicates a respective way of acquiring user information of the target user.

2. The method of claim 1, wherein the acquiring (S102) comprises:
transmitting (S201) the headshot information of the target user to a server to instruct the server to, according to the headshot information of the target user, inquire whether the server includes the user information of the target user, wherein the user information includes headshot information and profile information of the target user; and
receiving (S202) a first response message returned from the server, wherein the first response message contains the user information of the target user.

3. The method of claim 2, wherein, after transmitting (S201) the headshot information of the target user to the server, the method further comprises:
receiving (S203) a second response message returned from the server, wherein the second response message indicates that the server does not include the user information of the target user;
broadcasting (S204) the headshot information of the target user within a predefined range in which a target terminal device corresponding to the target user is located; and
receiving (S205) a third response message returned from the target terminal device, wherein the third response message contains the user information locally stored in the target terminal device.

4. The method of claim 1, wherein the acquiring (S102) comprises:
broadcasting (S301) the headshot information of the target user within a predefined range in which a target terminal device corresponding to the target user is located; and
receiving (S302) a third response message returned from the target terminal device, wherein the third response message contains the user information locally stored in the target terminal device.

5. The method of claim 4, wherein, after broadcasting (S301) the headshot information of the target user within the predefined range, the method further comprises:
receiving (S303) a fourth response message returned from the target terminal device, wherein the fourth response message indicates that the target user refuses to transmit the user information of the target user;
transmitting (S304) the headshot information of the target user to a server to instruct the server to, according to the headshot information of the target user, inquire whether the server includes the user information of the target user, wherein the user information includes headshot information and profile information of the target user; and
receiving (S305) a first response message returned from the server, wherein the first response message contains the user information of the target user.

6. A method for acquiring user information, the method comprising:
a server receiving (S401) headshot information of a target user transmitted by a first terminal device;
inquiring (S402), according to the headshot information of the target user, whether the server includes the user information of the target user, wherein the user information includes headshot information and profile information of the target user; and
transmitting (S403) a first response message to the first terminal device, in the case that the server includes the user information of the target user, wherein the first response message contains the user information of the target user.

7. The method of claim 6, wherein, after inquiring (S402) whether the server includes the user information of the target user, the method further comprises:
transmitting a second response message to the first terminal device, in the case that the server does not include the user information of the target user, wherein the second response message indicates that the server does not include the user information of the target user.

8. The method of claim 6 or 7, wherein, before receiving the headshot information of the target user transmitted by the first terminal device, the method further comprises:
acquiring and saving at least one user's user information.

9. A method for acquiring user information, the method comprising:
receiving (S501) headshot information of a target user broadcast by a first terminal device;
determining (S502) whether a second terminal device is a target terminal device corresponding to the target user, based on the headshot information of the target user and headshot information stored in the second terminal device; and
transmitting (S503) a third response message to the first terminal device, in the case that the second terminal device is the target terminal device, wherein the third response message contains the user information locally stored in the target terminal device, and the user information includes headshot information and profile information of the target user.

10. The method of claim 9, wherein, after determining (S502) whether the second terminal device is the target terminal device corresponding to the target user, the method further comprises:
transmitting a fourth response message to the first terminal device, in the case that the second terminal device is the target terminal device and the target user refuses to transmit the user information of the target user to the first terminal device, wherein the fourth response message indicates that the target user refuses to transmit the user information of the target user.

11. A device (60) for acquiring user information, comprising at least one module for carrying out the method of any of claims 1 to 5.

12. A device (110) for acquiring user information, comprising at least one module for carrying out the method of any of claims 6 to 8.

13. A device (150) for acquiring user information, comprising at least one module for carrying out the method of any of claims 9 to 10.

14. A terminal device, the terminal device acting as a first terminal device, the terminal device comprising a processor and a memory for storing instructions executable by the processor,
wherein the processor is configured to:
obtain headshot information of a target user; and
acquire user information of the target user, based on the headshot information of the target user and a predefined set of acquisition policies, wherein the predefined set of acquisition policies includes at least one acquisition policy, and each of the acquisition policies indicates a respective way of acquiring user information of the target user.

15. A server, the server comprising a transmitter, a receiver, a processor, and a memory for storing instructions executable by the processor, wherein:
the receiver is configured to receive headshot information of a target user transmitted by a first terminal device;
the processor is configured to inquire, according to the headshot information of the target user, whether the server includes the user information of the target user, wherein the user information includes headshot information and profile information of the target user; and
the transmitter is configured to transmit a first response message to the first terminal device, in the case that the server includes the user information of the target user, wherein the first response message contains the user information of the target user.
